Europäisches Patentamt

European Patent Office

Office européen des brevets

(11) Publication number: **0 294 857**
**A1**

## EUROPEAN PATENT APPLICATION

(21) Application number: **88200114.2**

(22) Date of filing: **22.01.88**

(51) Int. Cl.⁴: **C05D 11/00**

(30) Priority: **01.06.87 NL 8701540**

(43) Date of publication of application:
**14.12.88 Bulletin 88/50**

(84) Designated Contracting States:
**AT BE CH DE ES FR GB IT LI LU NL SE**

(71) Applicant: **Willemsen, Gerard**
**Mosselweg 33**
**NL-8251 RA Biddinghuizen(NL)**

(72) Inventor: **Willemsen, Gerard**
**Mosselweg 33**
**NL-8251 RA Biddinghuizen(NL)**

(74) Representative: **Lobatto, Jacob Louis, Drs.**
**P.O.Box 1017 van Polanenpark 212**
**NL-2240 BA Wassenaar(NL)**

(54) Breeding ground stabilizer and method for improving a breeding ground.

(57) Soil stabilizer and method for improving soil, said soil stabilizer comprising at least lime, iron as a watersoluble compound and a fertilizer, optionally in addition magnesium as powder or as a watersoluble compound, and one or more of the elements vanadium, manganese, potassium, zinc, copper, molybdenum and silicon as a watersoluble compound in specific ratios for improving trees and vegetables. The method comprises the distribution of these components as a plurality of distinct entities, each entity comrpising at least one of the components. Preferably all components are added combined, optionally in a coated pill.

EP 0 294 857 A1

## Soil stabilizer and method for improving soil.

The invention relates to a soil stabilizer, in particular a composition for recovering affected vegetation, such as vegetables and trees, and promoting the growth and keeping quality thereof, as well as a method for improving soil.

It is known that vegetation, in particular vegetables and trees, are disadvantageously affected by acidic precipitation, such as acidic rain, acidic snow and acidic hail, as well as dry deposits, such as ammonium nitrate. In order to alleviate this disadvantageous action it was hitherto customary to add lime to the soil in order to increase the pH of the soil to the desired range of 6 - 7, preferably 7. Though some result was obtained in that way, the result is not satisfactory.

According to the invention it has now been found, that a satisfactory soil stabilizer is obtained by intermixing at least the following components in a specific rate: lime, iron as a watersoluble compound, such as a chelate, and a fertilizer, such as for example an artificial fertilizer or preferably a natural fertilizer. It has appeared possible to allow vegetation affected by the action of acidic precipitation and/or dry deposits, in particular vegetables and trees, to recover in part or completely, provided that they are not affected to a too advanced stage. It will be obvious that the degree of recovery will be to some extent dependant to the degree of affection. In this context vegetables in particular show an improved keeping quality, which is especially important for those vegetables which ordinarily lose their vitality within a short time, such as lettuce, tomato, cucumber and paprika.

The soil stabilizer according to the invention comprises, as stated above, lime, iron as a watersoluble compound, for example Iron-EDTA, and a fertilizer, such as an artificial fertilizer or a natural fertilizer, as well as, if desired additional components. As additional component magnesium as magnesium powder or as a watersoluble compound, comes into consideration in the first place. In addition the soil stabilizer may comprise also other elements, that are of importance for the vegetation, such as manganese, vanadium, potassium, zinc, copper, molybdenum and silicon. It will be obvious, that the amount of lime, that should be added to the soil will depend on the acidity of the soil to be treated, while the amounts of iron and if desired additional elements to be incorporated inro the composition, will depend on the degree of depletion of the soil with respect to the relevant elements.

The mutual ration of the components in the soil stabilizer will thus be dictated by the results of an analysis of one or more samples of the soil to be treated. Thus the ratio of lime : iron(as a compound) : fertilizer, if applied at 86 kg/ha to a soil to be treated, having a pH = 5, will be 40 : 30 : 30, if these are the sole components of the composition. If magnesium is incorporated as a fourth component this ratio will be 30 : 30 : 30 : 10, both ratios applying to a composition for trees. For vegetables these ratios will be 45 : 10 : 45 and 35 : 10 : 15 : 40 respectively. The ranges for trees will be between 60 : 20 : 20 and 10 : 45 : 45 on the one hand and between 50 : 20 : 20 : 10 and 0 : 45 : 45 : 10 on the other hand respectively. For vegetables the ranges will be between 50 : 15 : 35 and 50 : 5 : 45 on the one hand and between 30 : 15 : 35 : 20 and 45 : 5 : 45 : 5 on the other hand respectively.

If in addition to the above mentioned three or four components one or more of the above mentioned additional elements are added, these comprise from 5 to 10 % by weight of the composition to the detriment of one or more of the other components present.

In the first mentioned ratios of the ranges natural fresh cow dung may be used. In that case an initial activation period of about 3 (three) weeks should be accounted for. The other dry components may then be mixed into the fertilizer.

The nutritive value of the resh cow dung is also of importance. At a nutritive value of at most 2 the first mentioned ratio in any range will apply, whereas at a nutritive value of at least 3.5 the second mentioned value in any range will apply.

The application per ha should be at most 90 kg of the soil stabilizer and at least 50 kg.

If fresh cow dung is used, this may be slightly diluted with water in order to achieve a proper mixing.

The soil stabilizer can be used in various presentations, such as a powder or pills. If desired the pills may be provided with a coating, such as for example of carboxymethylcellulose, whereby a depot effect is achieved. The retarded action of the pills should be adjusted to the structure of the soil. Thus the retarding action should be high for very lose soil such as sand, while for solid soil, such as clay no coating agent such as carboxymethylcellulose, is required, other then as binding agent for manufacture of the pills. The coating serves to prevent that the soil stabilizer is washed away too fast.

It is advisable to apply the soil stabilizer shortly before a rain shower, as application during a dry spell may result in damage to the vegetation, such as so-called "burning". Use of the soil stabilizer in dissolved form will usually result in a too harsh approach, except in extremely high dilutions, whereby the object is not or insufficiently achieved. The soil stabilizer is suitable for application on soil on which trees, plants in general and more specifically vegetables, especially potatoes, lettuce, tomatoes, cucumbers, paprika and grass are growing. In that way a faster growth, showing by larger leaves as well as a higher yield and improved keeping quality are thus achieved.

The action of the soil stabilizer by application in the manner described above is adequate for a period of two to three years as far as trees are concerned, and for a period of one year as far as vegetables are concerned. Thus the application requires little labour. It will be obvious that on repeated application after the expiration of the above mentioned period, it will be desirable to take one or more soil samples again in order to determine the pH then prevailing, as well as the iron content, and in as far as of importance also the contents of any other desired additional element, to determine the composition of the soil stabilizer on the basis of the data thus obtained.

As fertilizer a natural fertilizer is preferably used in order to make use as much as possible of natural components and to avoid introduction of foreign components into the soil as much as possible.

As stated above, additional components may be incorporated into the soil stabilizer next to the main components discussed above. Among these are of imporatnce elements such as manganese, vanadium, potassium, zinc, copper, molybdenum and silicon, either as a watersoluble compound or, as far as possible, as such. These elements are of importance for the vegetation. These additional components will be used, if at all, in relatively small amounts in comparison to the iron contents. Apart therefrom the soil stabilizer may comprise other components as well, such as a binder and components for improving the soil, such as, carboxymethylcellulose as a binder, and a fungicide, if the condition of the soil demands so.

The invention also relates to a method for improving soil, wherein the components of the soil stabilizer as mentioned above, are applied in two or more separate combinations instead of being applied together. Thus the invention relates to a method for improving soil in that lime, iron as a watersoluble compound, such as Iron-EDTA, and a fertilizer, such as an artificial fertilizer or a natural fertilizer, if desired in combination with magnesium as a powder or as a watersoluble compound, and optionally additional desired elements such as manganese, vanadium, potassium, zinc, copper, molybdenum and silicon, are applied on the soil in ate least two distinct combinations, whereby a combination may comprise one or more components, and the mutual ratios of the combinations are such that as an ultimate result lime, iron and fertilizer, and if desired magnesium, are applied in a ratio of at least 10 : 45 : 45 and 0 : 45 : 45 : 10 respectively and at most 60 : 20 : 20 and 50 : 20 : 20 : 10 respectively for trees , while these limits will be for vegetables: upper limit 50 : 15 : 35 and 30 : 15 : 35:respectively and lower limit 50 : 5 : 45 and 45 : 5 : 45 : 5 respectivly, preferably 45 : 10 : 45 and 35 : 10 : 35 : 20 respectively. In order to obtain a proper distribution of the components and to prevent a fast washing out of the components, it will be desirable in most cases to provide the combinations, or at least one of them, with a coating, such as for example a coating of carboxymethylcellulose.

With a view to the required labour it will be advisable in most cases to apply at least two components in combination, though all components may be applied separately. As a consequence of the same considerations it is preferable to apply all essential components simultaneously in combination, such as is the case in application of the soil stabilizer as described above.

Thus if using for example combinations of on the one hand lime and iron and on the other hand fertilizer, the latter whether or not in combination with magnesium, the mutual ratio of lime : iron will usually be between 2 : 9 and 3 : 1, preferably 1 : 1 to 4 : 3 for trees and between 8 : 3 and 5 : 1, preferably 9 : 2 to 7 : 2 for vegetables, whereas for a possible mixture of fertilizer with magnesium the mutual ratio will be 9 : 2 tot 2 : 1 for trees and will be 7 : 4 to 9 : 1 for vegetables.

The application of the individual combinations should be performed in such a way that preferably the required amount of iron as applied with the one combination corresponds with the amount of fertilizer, applied with the other combination. Especially on application on soil allowing easy passage of water, such as sand, it is advisable to provide any one of the combinations with a coating, for example of carboxymethylcellulose.

On application of one or more of the additional elements such as manganese, vanadium, potassium, zinc, copper, molybdenum and silicon, these may be incorporated into any combination suitable for the relevant element. Using two or more of these elements, the suitable combination for any one of them may be the same.

Apart from the combinations mentioned above as an example other combinations are possible as well, such as for example lime with magnesium on the one hand and iron with fertilizer on the other hand, each time again maintaining the mutual ratio, but it is preferable by far in general to apply all components in one single combination whereby the ratios as mentioned for the soil stabilizer are appropriate.

The invention is further illucidated by the following examples, without limiting the invention thereto. In the examples all ratios are by weight unless stated otherwise.

## Example I

Of an oak planting on a surface of I ha, showing distinct symptoms of being affected, a.o. by yellowing of the leaves, baring of the tops, bad nerving of the leaves, a number of soil samples was taken. The type of soil was kampod soil, a mixture of sand and rock. After averaging the results obtained (direct measuring results and analysis results) the following averages were obtained at ground level (light), moisture content, nutritive value (nutrition expressed on a scale of 1 to 10) and pH. Of these values the nutritive value and the pH are of importance for determining the composition of the mixture forming the soil stabilizer.

Light 15.5 %; moisture content 2.2 %; nutritive value 1.7; pH = 2.4. These starting conditions require a composition of the soil stabilizer of either 50 % of lime, 30 % of iron (as Iron-EDTA) and 20 % of natural fertilizer, or 40 % of lime, 30 % of iron, 20 % of natural fertilizer and 10 % of magnesium ( as powder).

These mixtures are processed to pills, which were coated with carboxymethylcellulose. The pills thus obtained were distributed in an amount of 86 kg/ha on the relevant lot. The following improvements could be observed, for an expert after 1 month, for an outsider after three (3) months: 1. improvement of the colour (yellow turns into green); 2. better nerving of the leaves; 3. improved resistance of the surface of the leaves (smoother); 4. improvement of the soil (as appears from more and larger earthworms).

## Example II

Of a planting of fir trees on clay on a surface of 1 ha, which should symptoms of affection, soil samples (10) were taken, providing the following results: light 36 %; moisture content 7.2 %; nutritive value 2.8; pH = 4.5.

These starting conditions require a composition of the soil stabilizer of either 40 % of lime, 30 % of iron as Iron-EDTA, and 20 % of artificial fertilizer or 30 % of lime, 30 % of iron as above, 30 % of natural fertilizer and 10 % of magnesium ( as powder). These mixtures were stirred to homogeneous and sprayed on in an amount of 90 kg/ha.

In both cases a visible improvement was observed after three (3) months, which appeared from the following observations: 1. a wider and bigger setting of the needles; 2. a faster formation of buds; 3. a more intense green colour of the needles; 4. an extended keeping quality of branches or trees that had been cut off or sawn off. This latter point is of importance for Christmas trees, as these do not show any or hardly any loss of needles during the period that they are used as such.

## Example III

Of a planting of beeches on sand soil on a surface of 1 ha, showing symptoms of affection, soil samples were taken, which provided the following results: light 15 %; moisture content 2.2 %; nutritive value 3; pH = 3.

These starting conditions require a composition of the soil stabilizer of either 30 % of lime, 25 % of iron as Iron-EDTA, 25 % of natural fertilizer and 20 % of magnesium (as powder), or 40 % of lime, 30 % of iron as above and 30 % of natural fertilizer. These mixtures were processed to pills, which were coated with carboxymethyl cellulose. The pills thus obtained were distributed in an amount of 80 kg/ha on the relevant lot.

After three (3) months the following improvements were observed: 1. better nerving of the leaves; 2. the leaves are more intense green and the percentage of yellow leaves, initially present, has decreased; 3. improved repulsion of precipitation on the leaves, whreby less deposits; 4. the leaves show a higher resistance; 5. improvement of the soil, appearing from more and larger earthworms.

## Example IV

A planting of oak trees on sandy soil on a surface of 1 ha, showing symptoms of affection, is treated, after sampling of the soil (light 15 %; moisture content 2.2 %; nutritive value 2.8; pH = 4.5) by applications of two different type of pills; on the one hand pills comprising a mixture of lime and iron as Iron-EDTA in a mutual ratio of 1 : 1, coated with carboxymethylcellulose, and on the other hand pills, consisting of a mixture of a natural fertilizer and magnesium powder in a ratio of 3 : 1, also coated with carboxymethylcellulose. Both types of pills were applied in a combined amount of 86 kg/ha in a mutual ratio of 3 : 2, with the first figure of the ratio expressing the lime comprising mixture.

The planting thus treated showed improvements after three (3) months as stated in Example I with minor deviations in gradation.


Example V


A planting of lettuce on sandy soil on a surface of 1 ha, showing symptoms of affection by acid precipitation as well, was treated with the following composition after taking samples of the soil with the following results: light 85 %; moisture content 2.2; nutritive value 2.7; pH = 4.5): 30 % of lime, 15 % of iron as Iron-EDTA, 35 % of dried fertilizer pellets and 20 % of magnesium (as powder), at a rate of 90 kg/ha.

It appeared that the keeping quality of the lettuce was thus increased from about 6 days from cutting before treatment to about 10 days after cutting after treatment.

Similar tests with potatoes showed improved keeping quality by about 1/3. For both lettuce and potatoes the resulting products showed larger and healthier leaves, and the potatoes were also larger.

It will be obvious that the decomposition time of the pills used will depend on the composition of the soil. More in particular a longer decomposition time will be required for sandy soil than for clay, as mentioned above.

Especially on application of magnesium a somewhat more intense green colour is obtained without impairing the other improvements.


**Claims**


1. A soil stabilizer for combating the affection of vegetation by acid precipitation and/or deposits, characterized in that the stabilizer comprises a mixture of at least the following components: lime, iron as a watersoluble compound, and a fertilizer.

2. Soil stabilizer according to claim I, characterized in that it is resent as a pill or tablet.

3. Soil stabilizer according to claim 2, characterized in that the pill or tablet is coated.

4. Soil stabilizer according to one or more of the above claimes, characterized in that the iron compound is Iron-EDTA.

5. Soil stabilizer according to claim I, characterized in that it is present as a powder.

6. Soil stabilizer according to one or more of the above claimes, characterized in that the mutual ratio of lime : iron compound : fertilizer is within the range of 10 : 45 : 45 to 60 : 20 : 20 for trees and 50 : 5 : 45 to 50 : 15 : 35 for vegetables.

7. Soil stabilizer according to one or more of claims 1 to 5, characterized in that it also comprises magnesium.

8. Soil stabilizer according to claim 7, characterized in that the mutual ratio of lime : iron compound : fertilizer : magnesium is within the range of 0 : 45 : 45 : 10 to 50 : 20 : 20 : 10 for trees and 45 : 5 : 45 : 5 to 30 : 15 : 35 : 20 for vegetables.

9. Soil stabilizer according to one or more of the previous claims, characterized in that it also contains one or more of the following elements as a watersoluble compound: vanadium, manganese, potassium, zinc, copper, molybdenum and silicon in an amount of at most 10 % by weight of the total composition.

10. A method for applying a soil stabilizer, characterized in that lime, iron as a watersoluble compound, a fertilizer and optionally magnesium as such or as a watersoluble compound, and optionally one or more of the following elements as a watersoluble compound: vanadium, manganese, potassium, zinc, copper, molybdenum and silicon, are applied in an amount of 60 to 90 kg/ha on a soil affected by acid precipitation, separately or in any combination thereof, in a mutual ratio of lime : iron compound : fertilizer of 10 : 45 : 45 to 60 : 20 : 20 for trees and 50 : 5 : 45 to 45 : 15 : 35 for vegetables, or in the copresence of magnesium in a mutual ratio of 0 : 45 : 45 : 10 to 50 : 20 : 20 : 10 for trees and 45 : 5 : 45 : 5 to 30 : 15 : 35 : 20 for vegetables, the total amount of any additional element being at most 10 % by weight of the total composition

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB-A- 785 024 (THE DOW CHEMICAL CO.) * Claims; page 3, lines 43-53; page 4, line 94 – page 5, line 57; page 3, lines 108-121 * | 1,4,5,6 ,7,9,10 | C 05 D 11/00 |
| X | GB-A- 784 508 (THE DOW CHEMICAL CO.) * Page 4, lines 26-71; claims * | 1,4,5,6 ,7,9,10 | |
| X | FR-A-2 244 730 (SOCIETA ITALIANA RESINE S.I.R. S.P.A) * Claims; example 6 * | 1,5,7 | |
| A | GB-A- 803 052 (THE DOW CHEMICAL CO.) * Claims * | 1,4,5 | |
| X | GB-A- 741 378 (H.-A. SCHWEIGART et al.) * Claims * | 1 | |
| A | FR-A- 455 732 (P.-C. BERTHON) * Page 1 * | 1 | TECHNICAL FIELDS SEARCHED (Int. Cl.4) |
| A | US-A-2 920 950 (L.W. HEISE et al.) * Claims * | 1 | C 05 D |

The present search report has been drawn up for all claims

| Place of search | Date of completion of the search | Examiner |
|---|---|---|
| THE HAGUE | 29-09-1988 | SCHUT,R.J. |